# EUROPÄISCHE PATENTSCHRIFT

(11) **EP 2 354 055 B1**
(45) Veröffentlichungstag und Bekanntmachung des Hinweises auf die Patenterteilung: **23.04.2014**
(21) Anmeldenummer: 10016008.4
(22) Anmeldetag: 23.12.2010
(51) Int. Cl.: B65G 69/00, B65G 69/32

(54) **Torabdichtung mit Dichtung eines LKW-Türspaltes**
Door seal with seal for a HGV door gap
Etanchéification de portail dotée d'un joint pour seuil de porte de poids lourd

(30) Priorität: 31.01.2010 DE 202010001562 U; 31.05.2010 DE 102010022057
(43) Veröffentlichungstag der Anmeldung: 10.08.2011
(73) Patentinhaber: NANI Verladetechnik GmbH & Co. KG, 39365 Eilsleben (DE)
(72) Erfinder: Grunewald, Hans-Joachim, 14554 Seddiner See (DE)
(74) Vertreter: Vonnemann, Gerhard

(56) Entgegenhaltungen:
- DE-A1- 3 108 397
- US-A- 3 854 257
- US-A- 3 915 183
- US-A- 4 638 612
- US-A- 5 953 868
- US-A1- 2006 026 912
- US-B2- 7 695 048

## Beschreibung

Die Erfindung betrifft eine Torabdichtung zwischen dem Rand einer ortsfesten Öffnung eines Gebäudes oder eines Gebäudevorbaus und der Hecköffnung eines Aufbaus eines an diese Öffnung herangefahrenen Fahrzeugs, wobei die Torabdichtung mindestens ein horizontales Dichtungsteil zur Abdichtung des Spaltes zwischen dem oberen Rand der Hecköffnung und der festen Öffnung und sich seitlich gegen den Aufbau eines Fahrzeugs dichtende Dichtungsteile aufweist.

Derartige Torabdichtungen sind in verschiedenen Konstruktionsweisen bekannt. Sie dichten den Spalt zwischen einer Gebäudeöffnung und dem Aufbau eines an die Gebäudeöffnung herangefahrenen Fahrzeugs ab. Als Dichtungsteile sind Planen, Lamellen, elastische und aufblasbare Wülste im Gebrauch. Beispielsweise beschreibt die DE-A1 3530073 eine aus vertikalen Lamellen aufgebaute Torabdichtung. Torabdichtungen mit aufblasbaren luftgefüllten Dichtwülsten sind Gegenstand der US-PS 5,007,211, US-PS 4,750,299 und der GB-A 2 204 083. Gummiwülste oder Dichtungsteile aus Planen an variablen teilweise faltenbalgartig veränderbaren Gebäudevorbauten sind in DT-A1 25 55 201 und DE-A1 41 38 381 beschrieben.

Nachteilig an all diesen vorgeschlagenen Lösungen ist, dass die geöffneten Fahrzeugtüren, die an Scharnieren schwenkbar mit Fahrzeugaufbau verbunden sind, einen Spalt bilden. Wenn das Fahrzeug mit geöffneten Türen an ein Gebäude mit Torabdichtung heranfährt, kann weiterhin durch diesen Spalt Zugluft ins das Gebäude eindringen.

Es besteht somit ein dringendes Bedürfnis, insbesondere zur Vermeidung von Energieverlusten beim Güterumschlag an Lagerhäusern, eine zur Nachrüstung geeignete Dichtungskombination vorzuschlagen, die den Eintritt von Zugluft durch den Spalt zwischen Tür und Fahrzeugaufbau beseitigt und keine Änderungen an dem die Gebäudeöffnung anfahrenden Fahrzeugpark erforderlich macht und nachrüstbar ist.

Bei einer Torabdichtung zwischen dem Rand einer ortsfesten Öffnung eines Gebäudes oder eines Gebäudevorbaus und der Hecköffnung eines Aufbaus eines an diese feste Öffnung herangefahrenen Fahrzeugs, wobei die Torabdichtung mindestens ein horizontales Dichtungsteil zur Abdichtung des Spaltes zwischen dem oberen Rand der Hecköffnung und der festen Öffnung und sich seitlich gegen den Aufbau eines Fahrzeugs dichtende Dichtungsteile aufweist, wird diese Aufgabe dadurch gelöst, dass zwei vertikale Dichtungsteile zur Abdichtung des Spaltes zwischen den beiden seitlichen Rändern der festen Öffnung und der Hecköffnung vorgesehen sind, die sich strinseitig gegen den Rand der Hecköffnung legend angeordnet sind. Von den zwei vertikalen Dichtungsteilen ist eines linksseitig und das andere rechtsseitig der Öffnung angeordnet. Durch die Abdeckung des Spaltes zwischen geöffneter Fahrzeugtür und Fahrzeugaufbau mittels der erfindungsgemäß angeordneten Plane, kann dort kein Luftaustausch mehr stattfinden. Energieverluste durch ausfließende Kaltluft an Thermoschleusen im Sommer oder geheizten Lagerhäusern durch Eindringen der kälteren Außenluft im Winter werden somit vermieden. Damit ein ausreichend großer Federweg des Dichtungsteils gegeben ist, werden vorteilhaft die vertikalen Dichtungsteile außerhalb der Projektion der seitlichen Ränder der Hecköffnung am Gebäude oder am Gebäudevorbau befestigt. Die sich durch diesen Anbauort ergebende Länge des Dichtungsteils sorgt für den ausreichenden Federweg. Besonders vorteilhaft werden die erfindungsgemäßen vertikalen Dichtungsteile zusätzlich zu sich seitlich gegen den Aufbau eines Fahrzeughecks dichtende Dichtungsteile vorgesehen. Die eingangs erwähnten Torabdichtungen erfahren eine deutliche Verbesserung der Dichtwirkung. Dadurch, dass die vertikalen Dichtungsteile in vertikalen Befestigungsprofilen gehaltert sind, lassen sich die Dichtungsteile bei Beschädigung bequem austauschen. Die Befestigungsprofile lassen sich mit Montageelementen ausrüsten, die das Befestigen mittels Schrauben an der Wand ermöglichen.

In Ausgestaltung der Erfindung ist vorgesehen, dass die vertikalen Dichtungsteile als flexible Plane oder elastisch nachgebende Lamellen ausgebildet sind. Selbst bei ungenauem Anfahren des Fahrzeugs reicht die elastische Rückstellkraft des Dichtungsteils aus, Lagetoleranzen auszugleichen und auch bei Luftdruckunterschieden die Dichtwirkung sicher aufrecht zu erhalten.

Dabei hat sich als besonders effektiv eine Ausrichtung der Dichtungsteile herausgestellt, bei der die vertikalen Dichtungsteile unter einem Winkel zwischen 0° und 60°, vorzugsweise zwischen 30° und 50°, insbesondere 45°, zur Öffnungsebene der Hecköffnung bzw. der festen Öffnung angeordnet sind. Die Dichtungsteile brauchen bei dieser Einstellung einerseits nicht unnötig lang dimensioniert werden und weisen andererseits noch einen ausreichend großen Federweg auf, um sicher zur Anlage an die Hecköffnung zu gelangen.

Wenn die vertikalen Dichtungsteile an ihrem vertikalen befestigten Ende fest eingespannt sind, stellt das Materialverhalten der Dichtungsteile die notwendige Elastizität zur Verfügung. Diese ergibt sich aus dem Material, der Armierung, der Länge und Dicke der Dichtungsteile.

Dadurch, dass die vertikalen Dichtungsteile aus einem armierten Gummimaterial bestehen, ergibt sich eine lange Haltbarkeit bei großem Verschlei βwiderstand.

Ein günstiger Einbau ergibt sich, wenn die vertikalen Dichtungsteile innenseitig an einem Gebäudevorbau in einem Abstand zur Gebäudewand angeordnet sind, der kleiner oder gleich dem Abstand der Anfahrseite eines Anfahrpuffers vor der Gebäudewand ist.

Eine bevorzugte Ausführungsform der Erfindung wird beispielhaft an Hand einer Zeichnung erläutert. Die Figuren der Zeichnung zeigen im Einzelnen:
- Figur 1: einen horizontalen Schnitt als Detail einer linken Ecke einer Gebäudeöffnung in einem Niveau oberhalb der Rampenverkehrsfläche aber unterhalb des Daches eines Fahrzeugaufbaus mit dem erfindungsgemäßen Dichtungsteil als Ergänzung zu einer bekannten Torabdichtung mit Planen und
- Figur 2: einen horizontalen Schnitt als Detail einer linken Ecke einer Gebäudeöffnung in einem Niveau oberhalb der Rampenverkehrsfläche aber unterhalb des Daches eines Fahrzeugaufbaus mit dem erfindungsgemäßen Dichtungsteil als Ergänzung zu einer bekannten Torabdichtung mit aufblasbaren Wülsten.

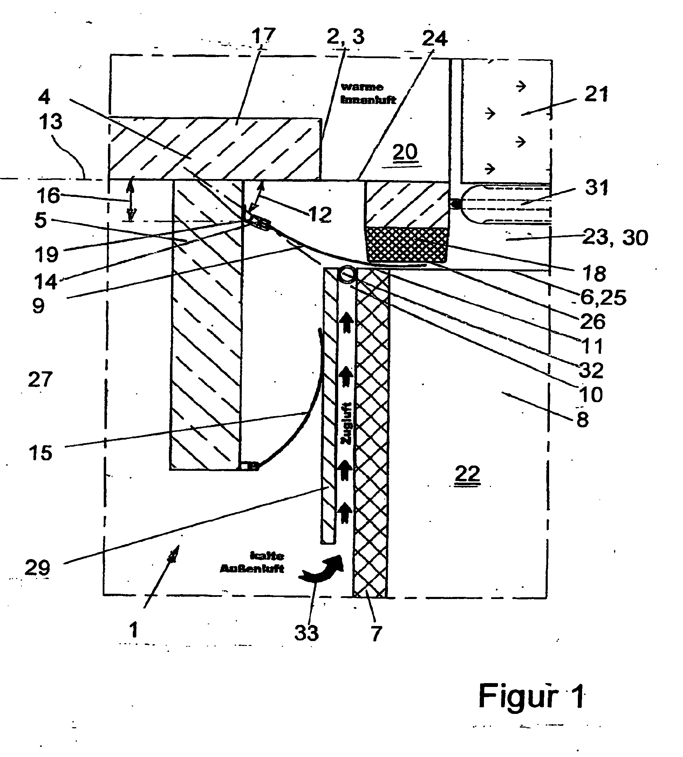

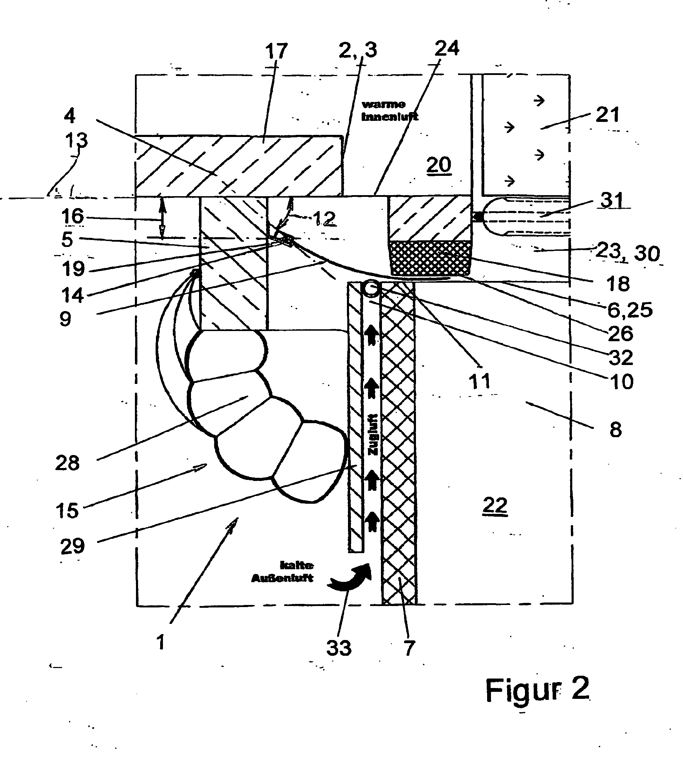

In den Figuren 1 und 2 bezeichnet die Bezugsziffer 1 eine Torabdichtung, die zusätzlich zu bekannten Dichtungsteilen 15 noch erfindungsgemäße vertikale Dichtungsteile 9 aufweist.

Dadurch, das Figuren 1 und 2 einen horizontalen Schnitt als Detail einer linken Ecke einer Gebäudeöffnung 3 in einem Niveau oberhalb der Rampenverkehrsfläche 20 aber unterhalb des Daches eines Fahrzeugaufbaus 7 mit dem erfindungsgemäßen Dichtungsteil 9 als Ergänzung zu einer Torabdichtung mit bekannten Dichtungsteilen 15 zeigen, sind die oberhalb der horizontalen Schnittebene gelegenen horizontalen Dichtungsteile nicht gezeigt.

Diese horizontalen Dichtungsteile dienen zur Abdichtung des Spaltes zwischen dem oberen Teil der Hecköffnung 6 des Fahrzeugs 5 und der festen Öffnung 3.

Die bekannten Dichtungsteile 15, in Figur 1 als Dichtungsplane 27 und in Figur 2 als aufblasbarer Dichtungswulst 28 bezeichnet, dichten den seitlichen Rand 2 der Gebäudeöffnung 3 mittelbar über den Gebäudevorbau 5 zur geöffneten Tür 29 des Aufbaus 7 hin ab.

Die rechte Seite der Dichtsituation muß man sich als Spiegelung der dargestellten linken Seite vorstellen.

Sichtbar ist in diesem Horizontalschnitt ein Teil der Verkehrsfläche 20 innerhalb eines Gebäudes 4 vor dessen Wand 17 noch der Gebäudevorbau 5 angesetzt ist. Niveaugleich mit der Verkehrsfläche ist eine Ladebrücke 21 in einen Ausschnitt der Verkehrsfläche 20 eingebaut. Die Ladebrücke 21 dient im Betrieb dem Niveauausgleich zwischen der Verkehrsfläche 20 und der Ladefläche 22 eines herangefahrenen Fahrzeugs 8 bei Überbrückung des Abstandes 23 zwischen Vorderkante 24 der ortsfesten Gebäudeöffnung 3 und hinterem Ende 25 der Ladefläche 22. Dieser Abstand wird von Anfahrpuffer 18 bestimmt, dessen Anfahrfläche 25 den Anfahrweg des Fahrzeugs begrenzt und die Gebäudewand 17 dadurch vor Schäden schützt. Der vor der Ladebrücke 21 entstehende Spalt 30 wird von einem aufblasbaren Dichtwulst 31 geschlossen.

Bevor das Fahrzeug 8 an die Gebäudeöffnung 3 heranfährt, werden die Türen 29 des Aufbaus 7 geöffnet und schwenken dabei um das Türscharnier 32. Dabei bildet sich ein Spalt 10 zwischen Außenfläche der Tür 29 und des Aufbaus 7. Im dargestellten Fall kann deshalb kalte Außenluft gemäß Strömungspfeile 33 in das geheizte Innere des Gebäudes 4 gelangen. Bei Kühlhäusern verhält es sich im Sommer umgekehrt.

Zur Verhinderung des mit dem Luftaustausch verbundenen Energieverlustes sind seitlich des vertikalen Randes 2 der Gebäudeöffnung 3 vertikale Dichtteile 9 angeordnet. Diese bestehen aus horizontalen Lamellen oder aus Planen ausreichender Länge. An ihrem Befestigungsende 14 sind sie fest in einem Befestigungsprofil 19 eingespannt. Das Befestigungsprofil ist seinerseits mit Schrauben im Gebäudevorbau 5 fest montiert. Der Abstand 16 des Befestigungsprofils 19 von der Gebäudewand 17 ist so gewählt, dass er etwa die Hälfte des Abstandes der Auffahrfläche 26 des Anfahrpuffers 18 zur Gebäudewand 17 beträgt. Dabei ist die Richtung des Dichtungsteils 6 zur Ebene 13 der Gebäudeöffnung 2 so eingestellt, dass der Winkel 12 zwischen Dichtungsteil 9 und Ebene 13 etwa 45° beträgt. Die Länge des Dichtungsteils ist so dimensioniert, dass unter Berücksichtigung der Einfahrtoleranzen eines Fahrzeugs 8 das Dichtungsteil 9 sich stirnseitig gegen den Rand 11 der Hecköffnung legt, und so den Spalt 10 zu verschließen.

Die erfindungsgemäßen Torabdichtungen sind gewerblich bei Lagerhäusern, Umschlagzentren und Kühlhäusern von großer Bedeutung, da sie unnötige Energieverluste beim Güterumschlag verhindern.

### Bezugsziffernliste

- 1: Torabdichtung
- 2: Rand ortsfeste Öffnung
- 3: Ortsfeste Öffnung
- 4: Gebäude
- 5: Gebäudevorbau
- 6: Hecköffnung
- 7: Aufbau
- 8: Fahrzeug
- 9: Vertikales Dichtungsteil
- 10: Spalt
- 11: Rand der Hecköffnung
- 12: Winkel
- 13: Ebene
- 14: Ende
- 15: Dichtungsteil
- 16: Abstand
- 17: Gebäudewand
- 18: Anfahrpuffer
- 19: Befestigungsprofil
- 20: Verkehrsfläche
- 21: Ladebrücke
- 22: Ladefläche
- 23: Abstand
- 24: Vorderkante
- 25: Hinteres Ende Ladefläche
- 26: Anfahrfläche
- 27: Dichtungsplane
- 28: Dichtungswulst
- 29: Fahrzeugtür
- 30: Spalt
- 31: Dichtungswulst
- 32: Türscharnier
- 33: Strömungspfeil

## Patentansprüche

1. Torabdichtung (1) zwischen dem Rand (2) einer ortsfesten Öffnung (3) eines Gebäudes (4) oder eines Gebäudevorbaus (5) und der Hecköffnung (6) eines Aufbaus (7) eines an diese feste Öffnung (3) herangefahrenen Fahrzeugs (8), wobei die Torabdichtung (1) mindestens ein horizontales Dichtungsteil zur Abdichtung des Spaltes zwischen dem oberen Rand der Hecköffnung (6) und der festen Öffnung (3) und sich seitlich gegen den Aufbau (7) eines Fahrzeugs (8) dichtende Dichtungsteile (15) aufweist, **dadurch gekennzeichnet, dass** zusätzlich zwei vertikale Dichtungsteile (9) zur Abdichtung des Spaltes (10) zwischen den beiden seitlichen Rändern der festen Öffnung (3) und der Hecköffnung (6) vorgesehen sind, die sich stirnseitig gegen den Rand (11) der Hecköffnung (5) legend angeordnet sind, und in vertikalen Befestigungsprofilen (19) gehaltert sind, die außerhalb der Projektion der seitlichen Ränder der Hecköffnung am Gebäude oder am Gebäudevorbau befestigt sind.

2. Torabdichtung nach Anspruch 1, **dadurch gekennzeichnet, dass** die vertikalen Dichtungsteile (9) als flexible Plane oder elastisch nachgebende Lamellen ausgebildet ist.

3. Torabdichtung nach Anspruch 1, 2 oder 3, **dadurch gekennzeichnet, dass** die Vertikalen Dichtungsteile (9) unter einem Winkel (12) zwischen 0° und 60°, vorzugsweise zwischen 30° und 50°, insbesondere 45°, zur Öffnungsebene (13) der Hecköffnung bzw. der festen Öffnung angeordnet sind.

4. Torabdichtung nach einem oder mehreren der vorhergehenden Ansprüche, **dadurch gekennzeichnet, dass** die vertikalen Dichtungsteile an ihrem vertikalen befestigten Ende (14) fest eingespannt sind.

5. Torabdichtung nach einem oder mehreren der vorhergehenden Ansprüche, **dadurch gekennzeichnet, dass** die vertikalen Dichtungsteile (9) aus einem armierten Gummimaterial bestehen.

6. Torabdichtung nach einem oder mehreren vorhergegangenen Ansprüche, **dadurch gekennzeichnet, dass** die vertikalen Dichtungsteile (9) innenseitig an einem Gebäudevorbau (5) in einem Abstand (16) zur Gebäudewand (17) angeordnet sind, der kleiner oder gleich dem Abstand der Anfahrseite eines Anfahrpuffers (18) von der Gebäudewand (17) ist.

## Claims

1. Door seal (1) between an edge (2) of a fixed opening (3) of a building (4) or a building's projecting structure (5) and a rear opening (6) of a superstructure (7) of a vehicle (8) backed up to said fixed opening (3), wherein said door seal (1) comprises at least one horizontal sealing part for sealing a gap (10) between the upper edge of said rear opening (6) and said fixed opening (3), and sealing parts (15) for laterally sealing said superstructure (7) of said vehicle (8), **characterized by** two additional vertical sealing parts (9) provided for sealing the gap (10) between the two lateral edges of said fixed opening (3) and said rear opening (6), said sealing parts having ends which are disposed abuttingly at an edge (11) of said rear opening (5) and mounted in vertical mounting profiles (19) fixed outside of the projection of the lateral edges of the rear opening to said building or to said building's projecting structure.

2. Door seal according to claim 1, **characterized in that** said vertical sealing parts (9) are formed as a flexible tarpaulin or resilient lamella.

3. Door seal according to one of claims 1, 2 or 3, **characterized in that** said vertical sealing parts (9) are disposed under an angle (12) of between 0° and 60°, preferably between 30° and 50°, in particular 45°, with respect to the opening plane (13) of said rear opening or said fixed opening, respectively.

4. Door seal according to at least one of the preceding claims, **characterized in that** said vertical sealing parts are fixedly clamped at their vertical mounted end (14).

5. Door seal according to at least one of the preceding claims, **characterized in that** said vertical sealing parts (9) are made of reinforced rubber material.

6. Door seal according to at least one of the preceding claims, **characterized in that** said vertical sealing parts (9) are disposed on the inner side at a building's projecting part (5) and have a distance (16) from the building wall (17) which is smaller or equal to the distance of the impact side of a bumper (18) from said building wall (17).

## Revendications

1. Etanchéification de porte (1) entre le bord (2) d'une ouverture fixe (3) d'un bâtiment ou d'un avant-corps (5) de bâtiment et l'ouverture arrière (6) de la carrosserie (7) d'un véhicule (8) amenée jusqu'à ladite ouverture fixe (3), l'étanchéification de porte (1) présentant au moins une pièce d'étanchéité destinée à obturer la fente entre le bord supérieur de l'ouverture arrière (6) et l'ouverture fixe (3) et des pièces d'étanchéité (15) assurant l'étanchéification latérale par rapport à la carrosserie (7) d'un véhicule (8), **caractérisée en ce que**, de plus, deux pièces d'étanchéité verticales (9) sont prévues, destinées à obturer la fente (10) entre les deux bords latéraux de l'ouverture fixe (3) et l'ouverture arrière (6) et dont la face avant s'appuie contre le bord (11) de l'ouverture arrière (5) et qui sont logées dans des profilés de fixation verticaux (19) fixés au bâtiment ou à l'avant-corps du bâtiment à l'extérieur de la projection des bords latéraux de l'ouverture arrière.

2. Etanchéification de porte selon la revendication 1, **caractérisée en ce que** les pièces d'étanchéité verticales (9) se présentent sous forme de plans flexibles ou de lamelles élastiques.

3. Etanchéification de porte selon l'une des revendications 1 ou 2, **caractérisée en ce que** les pièces d'étanchéité verticales (9) sont disposées selon un angle (12) compris entre 0° et 60°, de préférence entre 30° et 50°, en particulier de 45 , par rapport au plan d'ouverture (13) de l'ouverture arrière ou de l'ouverture fixe.

4. Etanchéification de porte selon l'une ou plusieurs des revendications précédentes, **caractérisée en ce que** les pièces d'étanchéité verticales sont solidement serrées à leur extrémité verticale fixée (14).

5. Etanchéification de porte selon l'une ou plusieurs des revendications précédentes, **caractérisée en ce que** les pièces d'étanchéité verticales (9) consistent en un matériau de caoutchouc armé.

6. Etanchéification de porte selon l'une ou plusieurs des revendications précédentes, **caractérisée en ce que** les pièces d'étanchéité verticales (9) sont disposées sur le côté intérieur d'un avant-corps de bâtiment (5) à une distance (16) de la paroi du bâtiment (17) inférieure ou égale à la distance de la face d'approche d'un butoir (18) par rapport à la paroi du bâtiment (17).
